# EUROPEAN PATENT SPECIFICATION

(11) **EP 1 054 397 B1**
(45) Date of publication and mention of the grant of the patent: **29.03.2006**
(21) Application number: 00110641.8
(22) Date of filing: 18.05.2000
(51) Int. Cl.: G11B 19/02, G11B 15/02

(54) **Video signal recording and reproducing apparatus with power saving function**
Videosignalaufzeichnungs- und -wiedergabegerät mit Energiesparfunktion
Appareil d'enregistrement et reproduction des signaux vidéo avec fonction d'économie d'énergie

(30) Priority: 21.05.1999 JP 14184699
(43) Date of publication of application: 22.11.2000
(73) Proprietor: MATSUSHITA ELECTRIC INDUSTRIAL CO., LTD., Kadoma-shi, Osaka 571-8501 (JP)
(72) Inventor: Yoshida, Seiji, Hirakata-shi, Osaka 573-0013 (JP); Hirose, Koji, Hirakata-shi, Osaka 573-1122 (JP)
(74) Representative: Grünecker, Kinkeldey, Stockmair & Schwanhäusser Anwaltssozietät

(56) References cited:
- US-A- 5 636 077

## Description

The present invention relates to a video signal recording and reproducing apparatus having a power saving function.

Importance of saving energy is noticed recently also for protection of global environments, and the power saving function comes to be incorporated in various electronic appliances.

In the video signal recording and reproducing apparatus, too, appliances provided with power saving function (hereinafter called power saving mode) are required.

A possibility of such a video signal recording and reproducing apparatus is explained below.

Fig. 3 is a schematic block diagram of a video signal recording and reproducing apparatus with power saving function.
Fig. 4 is a flowchart showing the procedure of setting the power saving mode in the video signal recording and reproducing apparatus with power saving function shown in Fig. 3.

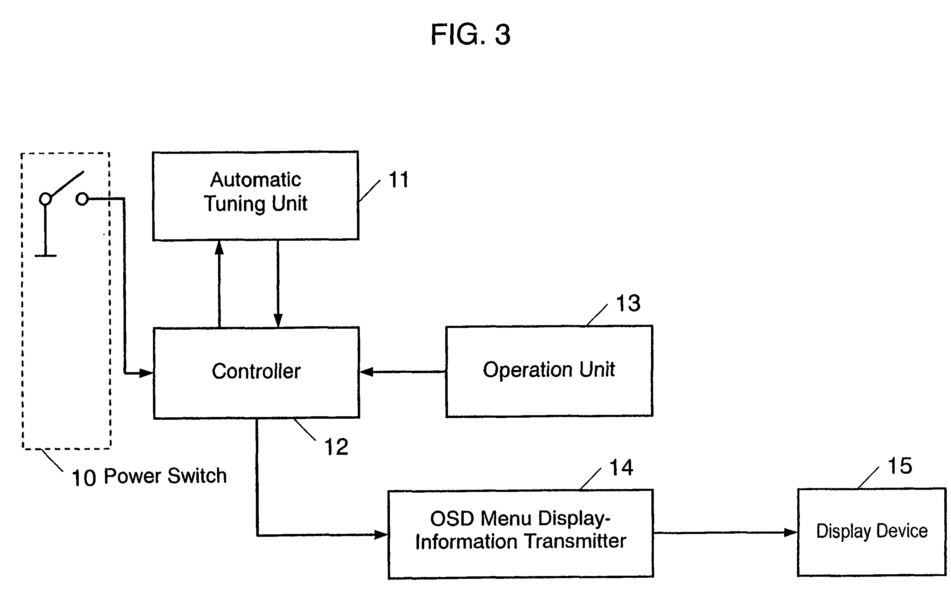

Referring to Fig. 3, the video signal recording and reproducing apparatus with power saving function is explained below.

When a power code is plugged in or a power switch 10 is turned on, a controller 12 receives power ON information. The controller 12 sends a command of automatic tuning to an automatic tuning unit 11. The automatic tuning unit 11 tunes automatically, and notices the end to the controller 12. Herein, automatic tuning is to set the channel selection frequency of the tuner in the video signal recording and reproducing apparatus automatically to the frequencies of plural television broadcasting stations capable of being received in the place (region) of installation of the apparatus.

Next, the user manipulates an operation unit 13 in a specified procedure while referring to an instruction manual, and sends complicated manipulation information for showing the power saving setting screen several times to the controller 12. The controller 12 sends display information several times to an OSD menu display information transmitter 14, and the power saving setting screen is displayed. This ends setting of power saving mode.

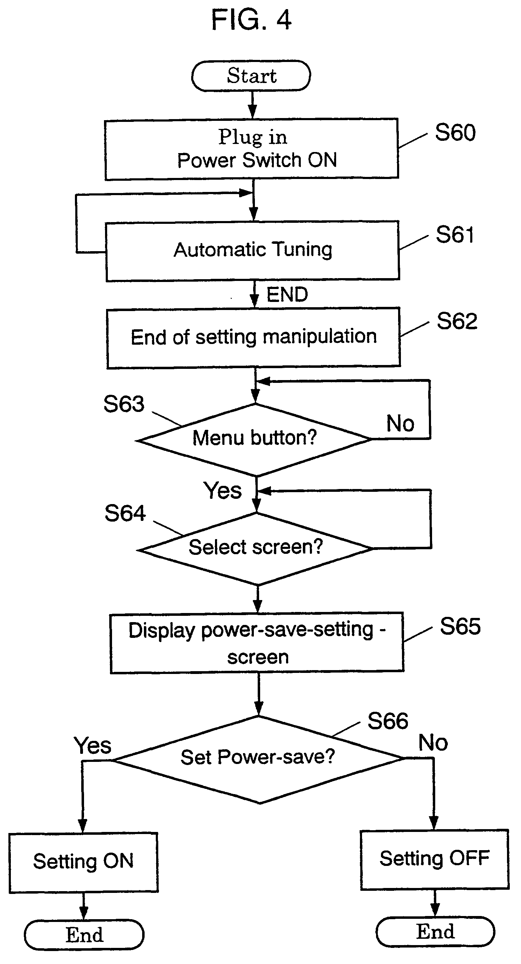

Referring then to Fig. 4, the power saving mode setting procedure in the video signal recording and reproducing apparatus with power saving function is described.

When the power code is plugged in or the power switch 10 is turned on (step S60), the automatic tuning unit tunes automatically (step s61). When tuning is over, the process is terminated (step S62), and the setting operation is complete.

The user pushes menu button for setting the power saving mode (step S63).
At step S64, sequentially, the user selects the power saving setting screen. At step S65, the power saving setting screen is displayed.
It shows setting of power saving mode is enabled, and inquires the user whether or not to set.
At step S66, the user manipulates cursor button (not shown), and selects ON or OFF of power saving setting, and setting is over.

In this constitution, however, the problem is that the power saving mode cannot be set unless complicated menu operation is done in the operation unit 13. Specifically, if the user does not have knowledge or experience of setting, the setting is very complicate.
Herein, the menu operation is the manipulation by the user for selecting each function of the video signal recording and reproducing apparatus according to the own preference.

Specific examples of the power saving mode include a power saving switch provided in the television receiver for viewing by lowering the brightness of the screen depending on the brightness of the room.

In the video signal recording and reproducing apparatus, various power saving functions for avoiding wasteful power consumption are possible, including cutting of power supply to the electric circuit system not required to function in each operation mode of the apparatus (recording, reproducing, tape rewinding, etc.), cutting of lighting of liquid crystal backlight or display tube (FIP, etc.) for displaying tape counter, time, receiving channel and each operation mode of apparatus, termination of broadcast in recording mode, and cutting of power at tape end.

Document US-A-5 636 077 describes an automatic power saving system which switches off a video recording and reproducing apparatus if no video signal is being recorded or reproduced and no key input has been received for a preset period.

The invention is devised to solve the problems of the video signal recording and reproducing apparatus shown in Figs. 3 and 4 and it is hence an object thereof to present a video signal recording and reproducing apparatus having a power saving function capable of setting the power saving mode easily without requiring complicated menu manipulation.

To achieve this object, the video signal recording and reproducing apparatus having a power saving function of the invention comprises an operation unit for issuing manipulation information for setting the power saving mode, a power saving setting screen display information transmitter for sending out the power saving setting screen display information inquiring presence or absence of setting of power saving mode to a display device before menu manipulation after plugging in or turning on power switch, and a controller for controlling the power saving setting screen display information transmitter on the basis of the information from the operation unit.

In this constitution, when installing the video signal recording and reproducing apparatus having a power saving function, after plugging in or turning on the power switch, by displaying the power saving setting screen without complicated manipulation of menu or the like, the user can easily set the power saving mode. The user also learns the importance of saving resources by using the power saving mode.

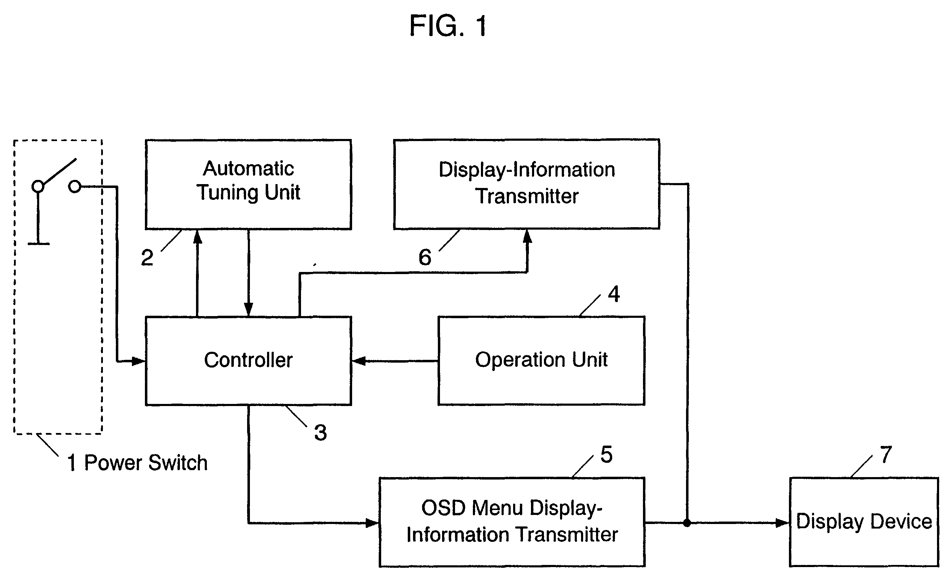

Fig. 1 is a schematic block diagram of a video signal recording and reproducing apparatus with power saving function in an embodiment of the invention.

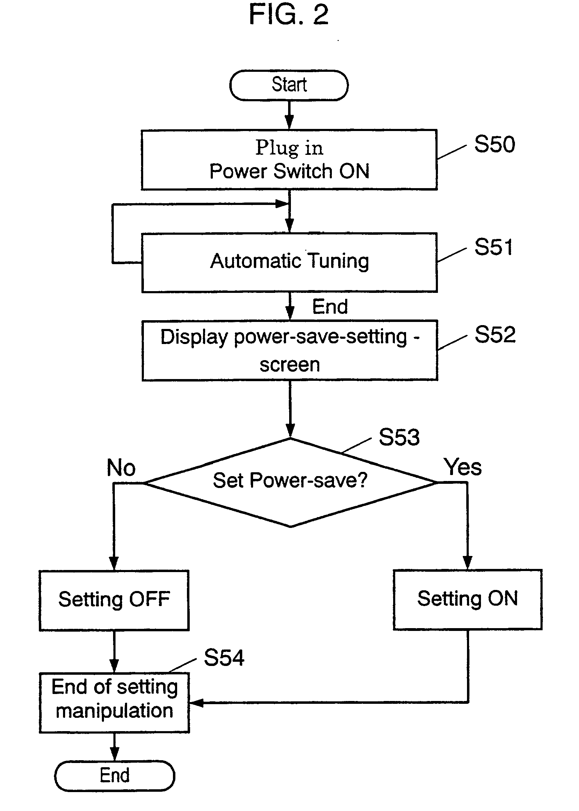

Fig. 2 is a flowchart showing the procedure of setting of power saving mode in the video signal recording and reproducing apparatus with power saving function in the embodiment of the invention.
Fig. 3 is a schematic block diagram of another video signal recording and reproducing apparatus with power saving function.
Fig. 4 is a flowchart showing the procedure of setting of power saving mode in the video signal recording and reproducing apparatus with power saving function shown in Fig. 3.

The video signal recording and reproducing apparatus having a power saving function of the invention comprises an operation unit for issuing manipulation information for setting the power saving mode, a power saving setting screen display information transmitter for sending out the power saving setting screen display information inquiring the user presence or absence of setting of power saving mode to a display device before menu manipulation after turning on power switch, and a controller for controlling the power saving setting screen display information transmitter on the basis of the information from the operation unit.

An embodiment of the video signal recording and reproducing apparatus having a power saving function of the invention is described below.

Fig. 1 is a schematic block diagram of a video signal recording and reproducing apparatus with power saving function in an embodiment of the invention.

In Fig. 1, when a power cord is plugged in or a power switch 1 is turned on, a controller 3receives information of power ON. Receiving the information of power ON, the controller 3 issues an automatic tuning command to an automatic tuning unit 2.
The automatic tuning unit 2 tunes automatically, and tells the end to the controller 3. The controller 3 commands display of power saving setting screen to a power saving setting screen display information transmitter 6.
Receiving this command, the power saving setting screen display information transmitter 6 sends out the power saving setting screen to a display device 7.
An operation unit 4 sends the manipulation information to be set to the controller 3. The controller 3 sends the set information to the power saving setting screen display information transmitter 6, and terminates the setting of power saving mode.

The setting procedure of power saving mode in this embodiment is explained by referring to Fig. 2.

Fig. 2 is a flowchart showing the procedure of setting of power saving mode in the video signal recording and reproducing apparatus with power saving function in the embodiment of the invention.

First, the power code is plugged in or the power switch 1 is turned on (step S50), the automatic tuning unit 2 tunes automatically (step S51).
The power saving setting screen is displayed to show it is ready to set the power saving mode, inquiring the user presence or absence of setting (step S52). The user manipulates the cursor button (not shown) of the operation unit 4, and when ON is selected in power saving setting, the power saving mode is set, and when OFF is selected, the power saving mode is not set (step S53). After execution of step S53, the setting operation is over (step S54).

Automatic tuning is to set the channel selection frequency of the tuner in the video signal recording and reproducing apparatus automatically to the frequencies of plural television broadcasting stations capable of being received in the place (region) of installation of the apparatus. The menu manipulation is not shown, but it is freely executed by the user after step S54.

Thus, according to the embodiment, after turning on the power switch 1, by displaying the power saving setting screen without complicated operation such as menu manipulation, the user can easily set the power saving mode. The user also learns the importance of saving resources through the power saving mode.

## Claims

1. A video signal recording and reproducing apparatus with power saving function comprising
an operation unit (4) for issuing manipulation information for setting the power saving mode,
**characterized by**
a power saving setting screen display information transmitter (6) for sending out the power saving setting screen display information inquiring presence or absence of setting of power saving mode to a display device (7) before menu manipulation and after plugging in or turning on power switch (1), and
a controller (3) for controlling said power saving setting screen display information transmitter (6) on the basis of the information from said operation unit (4).

2. The video signal recording and reproducing apparatus with power saving function of claim 1, further comprising an automatic tuning unit (2), wherein said controller (3) commands display of power saving setting screen to said power saving setting screen display information transmitter (6), after completion of automatic tuning by said automatic tuning unit (2) and before menu manipulation, and said controller (3) controls said power saving setting screen display information transmitter (6) on the basis of manipulation of said operation unit (4).

## Patentansprüche

1. Videosignal-Aufzeichnungs-und-Wiedergabe-Vorrichtung mit Stromsparfunktion, die umfasst:
eine Betätigungseinheit (4), die Bedienungsinformationen zur Einstellung des Stromsparmodus ausgibt,
**gekennzeichnet durch**:
eine Einrichtung (6) zum Senden von Stromspareinstellungs-Bildschirmanzeigeinformationen, die die Stromspareinstellungs-Bildschirmanzeigeinformationen, die Vorhandensein oder Nichtvorhandensein der Einstellung des Stromsparmodus abfragen, vor Menü-Bedienung und nach dem Einstecken oder Anschalten eines Stromschalters (1) an eine Anzeigevorrichtung (7) sendet, und
eine Steuereinrichtung (3), die die Einrichtung (6) zum Senden von Stromspareinstellungs-Bildschirmanzeigeinformationen auf Basis der Informationen von der Betätigungseinheit (4) steuert.

2. Videosignal-Aufzeichnungs-und-Wiedergabe-Vorrichtung mit Stromsparfunktion nach Anspruch 1, die des Weiteren eine automatische Abstimmeinheit (2) umfasst, wobei die Steuereinrichtung (3) die Einrichtung (6) zum Senden von Stromspareinstellungs-Bildschirmanzeigeinformationen nach Abschluss automatischer Abstimmung durch die automatische Abstimmeinheit (2) und vor Menü-Bedienung anweist, einen Stromspareinstellungsbildschirm anzuzeigen, und die Steuereinrichtung (3) die Einrichtung (6) zum Senden von Stromspareinstellungs-Bildschirmanzeigeinformationen auf Basis von Bedienung der Betätigungseinheit (4) steuert.

## Revendications

1. Appareil d'enregistrement et de reproduction de signaux vidéo avec fonction d'économie d'énergie, comprenant :
une unité d'exploitation (4) destinée à délivrer des informations de manipulation pour la mise en oeuvre du mode économie d'énergie,
**caractérisé par**
un émetteur (6) d'information d'affichage sur écran de la mise en oeuvre de l'économie d'énergie destiné à délivrer l'information d'affichage sur écran de la mise en oeuvre de l'économie d'énergie recherchant la présence ou l'absence du mode d'économie d'énergie à un écran d'affichage (7) avant la manipulation du menu et après enfichage ou fermeture d'un interrupteur (1) d'énergie, et
un dispositif (3) de commande destiné à commander ledit émetteur (6) d'information d'affichage sur écran de la mise en oeuvre de l'économie d'énergie en se basant sur l'information délivrée par ladite unité d'exploitation (4).

2. Appareil d'enregistrement et de reproduction de signaux vidéo avec fonction d'économie d'énergie selon la revendication 1, comprenant en outre une unité (2) de réglage automatique, dans lequel ledit dispositif (3) de commande commande l'affichage sur l'écran de la mise en oeuvre de l'économie d'énergie audit émetteur (6) d'information d'affichage sur écran de la mise en oeuvre de l'économie d'énergie, après achèvement de réglage automatique par ladite unité (2) de réglage automatique et avant la manipulation du menu, et ledit dispositif (3) de commande commande ledit émetteur (6) d'information d'affichage sur écran de la mise en oeuvre de l'économie d'énergie en se basant sur la manipulation de ladite unité d'exploitation (4).
